Europäisches Patentamt

European Patent Office

Office européen des brevets

(19)

(11) Veröffentlichungsnummer : **0 077 042**
**B1**

(12) **EUROPÄISCHE PATENTSCHRIFT**

(45) Veröffentlichungstag der Patentschrift :
21.01.87

(21) Anmeldenummer : 82109317.6

(22) Anmeldetag : 08.10.82

(51) Int. Cl.⁴ : **F 16 F 15/06, E 02 D 27/34**

(54) **Dämpfer zur Aufnahme von Kipp-Schwingungen zwischen Fundament und einer das Fussteil eines Gerätes bildenden Platte, insbesondere eines in erdbebengefährdeten Gebieten aufzustellenden Hochspannungsschaltgerätes.**

(30) Priorität : 08.10.81 DE 3139956

(43) Veröffentlichungstag der Anmeldung :
20.04.83 Patentblatt 83/16

(45) Bekanntmachung des Hinweises auf die Patenterteilung : 21.01.87 Patentblatt 87/04

(84) Benannte Vertragsstaaten :
CH FR GB IT LI

(56) Entgegenhaltungen :
DE-A- 2 749 654
FR-A-   608 537
FR-A- 1 256 059
FR-A- 1 569 753
FR-A- 2 465 124
GB-A-   261 202
GB-A- 1 104 372
US-A- 2 032 659
US-A- 3 659 814
US-A- 3 856 242

(73) Patentinhaber : Licentia Patent-Verwaltungs-GmbH
Theodor-Stern-Kai 1
D-6000 Frankfurt/Main 70 (DE)

(72) Erfinder : Augustin, Hans-Georg, Dipl.-Ing.
Habichtswaldstrasse 11 d
D-3501 Fuldabrück (DE)
Erfinder : Thiel, Hans-Gerd, Dr. rer. nat.
Schillerstrasse 12
D-3502 Vellmar (DE)

(74) Vertreter : Lertes, Kurt, Dr. et al
Licentia Patent-Verwaltungs-GmbH Theodor-Stern-Kai 1
D-6000 Frankfurt/M 70 (DE)

## Beschreibung

Die Erfindung betrifft einen Dämpfer zur Aufnahme von Kippschwingungen zwischen Fundament und einer das Fußteil eines Gerätes bildenden Platte, insbesondere eines in erdbengefährdeten Gebieten aufzustellenden Hochspannungsschaltgerätes, unter Verwendung von die Platte durchdringenden, im Fundament verankerten Schraubbolzen und von zur Begrenzung des Biegemomentes bei Schwingungen und zur Schwingungsdämpfung vorgesehenen Federelementen, wobei die Ferelemente zwischen der Oberseite der Platte und an den Schraubbolzen angebrachten oberen Widerlagern, die Schraubbolzen konzentrisch umgebend, angeordnet sind.

Ein derartiger Dämpfer ist aus der US-A-3 856 242 mit einer federnden Haltevorrichtung bekannt, bei der der Fußteil des Gerätes auf Tellerfedern ruht und durch Gewindebolzen mit Mutter, Haltescheibe und dazwischengelagerten Tellerfedern gegen das Fundament gedrückt wird. In einer Ausführungsform wird über einen Scherbolzen eine feste Verbindung zwischen dem Fußteil des Geräts und dem Fundament hergestellt.

Diese bekannte Vorrichtung besitzt kein dauerhaft festes Widerlager. Entweder spricht das System auf kleinste Anregungen an, oder — so in der erwähnten Ausführungsform — es muß nach jedem Abscheren des Scherbolzens dieser ersetzt werden. Desweiteren gewährt die Lagerung auf Tellerfedern keine exakte Rückführung in eine genau definierte Lage und es besteht die Gefahr, daß das System sich bei einer bestimmten Erdbebenschwingung aufschaukelt.

Ein andersartiges Dämpfersystem ist aus der DE-A-2 749 654 bekannt. Bei diesem Dämpfer sind Fußteil und Fundament als aufeinanderliegende, leicht gegeneinander verschiebbare ebene Platten ausgebildet, und es ist ein als Zugstab ausgebildetes Federelement vorgesehen, welches den Fußteil und das Fundament in Bohrungen durchdringt, wobei sein oberes Ende in ein Kugelgelenk am Fußteil gelagert ist und sein unteres Ende unter Zwischenschaltung einer Ringfeder in einem zweiten Kugelgelenk am Fundament gelagert ist.

Diese bekannte Vorrichtung, bei der eine Entkopplung des Schalters von horizontalen Fundamentbewegungen angestrebt wird, ist im Aufbau relativ aufwendig. Die Rückkehr in definierter Null-Lage ist bei dieser Vorrichtung nicht in jedem Falle gewährleistet. Sie spricht nicht bei einer bestimmten (einstellbaren) Belastung an und reagiert auf Zeiteinflüsse (Korrosion in Lagern und Gelenken).

Der Erfindung liegt die Aufgabe zugrunde, einen Dämpfer der eingangs genannten Art zu schaffen, bei dem nicht die Gefahr des Aufschaukelns besteht, der das Gerät unter Vernichtung der Schwingungsenergie sicher in eine definierte Null-Lage zurückführt und sich bei Beanspruchungen des Normalbetriebs so verhält, als sei das Gerät fest mit dem Fundament verschraubt.

Die Aufgabe wird erfindungsgemäß dadurch gelöst, daß die Platte auf an den Schraubbolzen angebrachten festen unteren Widerlagern aufliegt, und daß als Federelemente Ringfedern vorgesehen sind, die eine zur Dämpfung ausreichende Hysterese aufweisen und derart vorgespannt sind, daß bei Unterschreiten einer vorgegebenen, einstellbaren Kraft ein kraftschlüssige Verbindung zwischen der Platte und dem Fundament besteht.

Eine Ausgestaltung der Erfindung besteht darin, daß die Federelemente derart vorgespannt sind, daß bei Unterschreiten einer vorgegebenen einstellbaren Kraft eine kraftschlüssige Verbindung zwischen der Platte und dem Fundament besteht.

Mit der erfindungsgemäßen Lösung wird bei einfacher Bauweise eine hervorragende Wirkung erzielt. Das Gerät, beispielsweise der Hochspannungsschalter, wird ab einem bestimmten Moment biegeweich, woraus sich eine Verminderung der Resonanzfrequenz des Systems sowie eine gewisse Momentbegrenzung ergibt. Durch die besondere Anordnung der Federn ergibt sich eine große Federauslenkung und damit eine gegenüber der bekannten Vorrichtung erheblich größere Wirkung. Mit der erfindungsgemäßen Vorrichtung lassen sich bereits vorhandene Geräte auf sehr einfache Weise nachrüsten.

Mit anderen Worten ist die Erfindung durch folgende Vorteile gekennzeichnet:

Schlanke Konstruktion, durch Federn erniedrigte Eigenfrequenz, keine Gefahr des Aufschaukelns, Momentbegrenzung im Porzellan, hohe innere Dämpfung und Nachrüstbarkeit, keine alterungsabhängigen Lager, Begrenzung der auf einen Erdisolator wirkenden Biegemomente.

In zweckmäßiger Weise werden gemäß einer Ausgestaltung der Erfindung die Widerlager von Muttern und Scheiben gebildet, durch die eine Einstellung der Federvorspannung und eine Ausrichtung des Gerätes ermöglicht wird.

Gemäß einer weiteren vorteilhaften Ausgestaltung ist vorgesehen, daß auf der Platte eine Abstandsscheibe aufliegt, an der sich die Feder abstützt, daß konzentrisch zum Schraubbolzen und gegenüber diesem axial verschiebbar eine das Federelement umgebende Kappe angeordnet ist, deren Oberteil am oberen Widerlager anliegt oder selbst das Widerlager darstellt. Mit dieser Lösung wird eine Zentrierung der Federn sowie ein Staub-, Bewitterungs- und mechanischer Schutz geschaffen. Außerdem wird erreicht, daß die Platte nicht unter den Topf stößt und der Topf dennoch relativ gut verschlossen ist.

Gemäß einer weiteren Ausgestaltung der Erfindung sind für eine Platte mindestens vier Federelemente derart vorgesehen, daß Kippbewegungen nach beiden Seiten in mindestens zwei paarweise zueinander senkrechten Richtungen erfolgen können. Hierdurch ergeben sich günstige symmetrische Verhältnisse und es ist eine gute Ausrichtbarkeit gewährleistet. Die vier Federelemente sind zweckmäßig im Quadrat angeordnet. Durch diese Anordnung wird die Fundamenterstellung vereinfacht, Irrtümern vorgebeugt und eine Standardisierung erleichtert.

Ein Ausführungsbeispiel der Erfindung ist in der Zeichnung dargestellt und im folgenden näher erläutert.

Es zeigen

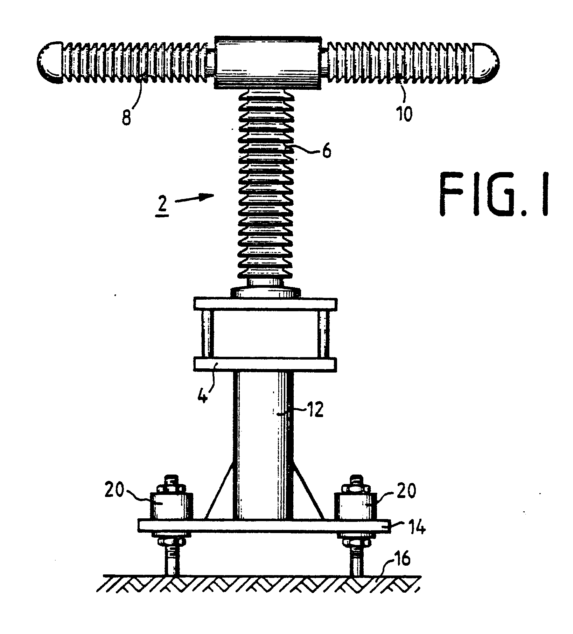

Figur 1 ein Hochspannungsschaltgerät mit Schwingungsdämpfern,

Figur 2 eine Teilansicht eines Schwingungsdämpfers im Schnitt.

Das in der Zeichnung dargestellte Hochspannungsschaltgerät 2 weist ein Gestell 4 auf, auf dem eine Polsäule 6 mit zwei Schaltköpfen 8, 10 angebracht ist. Das Gestell 4 ruht seinerseits auf einer Säule 12, die einen Fußteil in Form einer Platte 14 aufweist. Die Platte 14 ruht auf beispielsweise vier im Fundament 16 verankerten Ankerschraubbolzen 18, von denen zwei zeichnerisch dargestellt sind, und die mit Dämpferelementen 20 versehen sind.

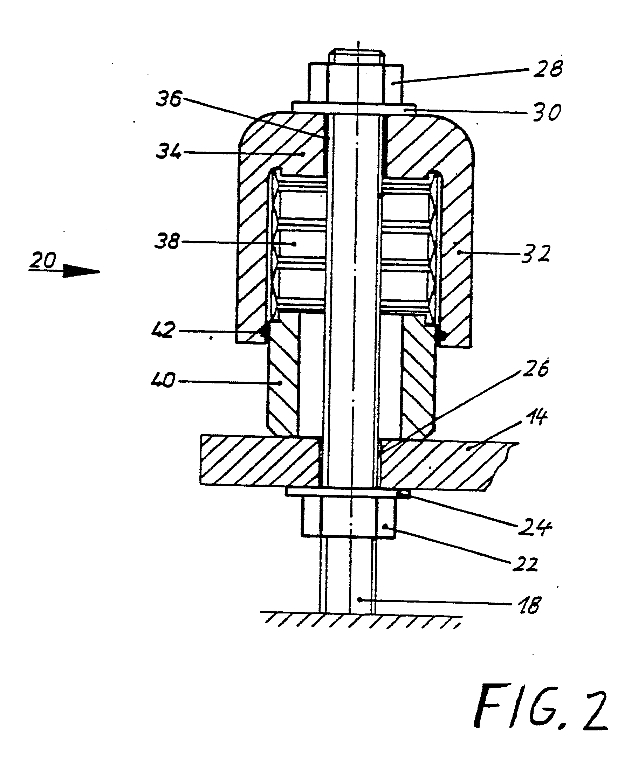

Nachfolgend wird auf Fig. 2 bezug genommen, in der ein Dämpferelement 20 vergrößert dargestellt ist. Der Schraubbolzen 18 weist ein unteres Widerlager, bestehend aus einer Mutter 22 und einer aufgelegten Scheibe 24, auf, so daß Kippbewegungen um die von diesem Widerlager gebildete Achse möglich sind. Auf der Scheibe 24 ruht die Platte 14, die zu diesem Zwecke vier Bohrungen 26 (nur eine sichtbar) aufweist, durch die die Schraubbolzen 18 dringen. Am oberen Ende der Schraubbolzen 18 ist ein oberes Widerlager vorgesehen, welches gleichfalls aus einer Mutter 28 und einer Scheibe 30 besteht. Zwischen der Oberseite der Platte 14 und dem oberen Widerlager ist eine zylinderförmige Kappe 32 vorgesehen, die nach unten hin offen ist und in deren Oberteil 34 eine Bohrung 36 vorgesehen ist, durch die der Schraubbolzen 18 dringt. Im Inneren der Kappe 32 ist eine Ringfeder 38 mit Dämpfungseigenschaften, den Schraubbolzen 18 konzentrisch umgebend, angeordnet, die Kippbewegungen bedämpft und ausgelenkte Geräte in die Null-Lage zurückführt. Hierzu weist die Ringfeder 38 — oder ein ähnlich wirkendes Bauelement — eine zur Dämpfung ausreichende Hysterese auf. Die Ringfeder stützt sich mit ihrem oberen Ende an der Innenfläche des Oberteils 34 der Kappe 32 und mit ihrem unteren Ende an einer auf der Oberseite der Platte 14 liegenden Abstandsscheibe 40 ab. Die Kappe 32 liegt relativ eng an der Ringfeder 38 an und gewährleistet so eine Zentrierung sowie einen Staub-, Bewitterungs- und mechanischen Schutz. Zwischen der Abstandsscheibe 40 und der Kappe 32 ist zweckmäßig ein Dichtungsring 42 angeordnet. Die Abstandsscheibe 40 kann entsprechend vorgegebenen Anforderungen in ihrer Höhe unterschiedlich ausgestaltet werden, so daß der Abstand zwischen der Kappe 32 und der Platte 14 nach Bedarf eingestellt werden kann. Die Abmessung aller Bauelemente richten sich nach vorgegebenen, berechenbaren Bedingungen.

Durch die Auflage der Ankerschrauben 18 auf Stehbolzen läßt sich die Polsäule 6 in sehr einfacher Weise in der Senkrechten ausrichten. Mit Hilfe der Spannmutter 28 oder auch der Spannmutter 22 läßt sich die Federvorspannung einfach und mit hinreichender Genauigkeit einstellen. Die Größe der Vorspannung bestimmt, bei welchem Biegemoment an der Polsäule die Federn ansprechen. Durch hinreichend große Vorspannung wird erreicht, daß sich die Polsäule im normalen, Betriebszustand (ohne Erdbeben) so verhält, als sei sie mit dem Fundament fest verschraubt.

Die Wirkungsweise des erfindungsgemäßen Dämpferelementes 20 besteht nicht in einer horizontalen Entkopplung der Platte 14 des Gerätes 2 vom Fundament 16, vielmehr liegt nämlich die Tatsache zugrunde, daß durch horizontale Bewegungen des Fundamentes 16 horizontale Biegeschwingungen des Hochspannungsschaltgerätes 2 angeregt werden. Das damit verbundene Biegemoment führt zu Kippbewegungen der Platte 14 um die Achse, die durch die unteren Widerlager (22, 24) gebildet werden.

Die Aufgabe der Ringfedern 38 ist es nun, diese Kippbewegungen in die Null-Lage zurückzuführen und gleichzeitig Energie zu vernichten, d. h. die Schwingungen zu bedämpfen. Die Federn 38 sind vorgespannt, so daß bei kleineren Kräften, wie Seilzug- oder Windkräften, eine kraftschlüssige Verbindung zwischen Platte 14 und Fundament 16 besteht. Erst wenn die auf die Federn 38 einer Seite wirkende Druckkraft ein bestimmtes Maß übersteigt, werden diese Federn 38 zusammengedrückt. Ihre Kennlinie ist eine Hystereseschleife, die beim Entspannen eine wesentlich kleinere Federkonstante aufweist als beim Spannen. Die Fläche der Hystereseschleife ist ein Maß für die Dämpfung. Wirkt das Biegemoment am Hochspannungsschaltgerät 2 in umgekehrter Richtung, so werden die Federn 38 auf der anderen Seite zusammengedrückt. Dies geschieht im Wechsel so lange, bis die Schwingung soweit abgeklungen ist, daß die auf die Federn 38 wirkenden Kräfte unterhalb der Vorspannkraft bleiben.

Ein Aufschaukeln der Biegeschwingungen durch eine Erdbebenanregung kann auf diese Weise wirksam begrenzt werden. Außerdem wird durch die Federn 38 auch die Eigenfrequenz der Gesamtanordnung erniedrigt, was sich ebenfalls positiv auswirkt, da üblicherweise die Anforderungen an die Erdbebensicherheit, gestützt auf die Erfahrung, niedrigere Prüfbeschleunigungen bei kleineren Frequenzen vorsehen.

**Patentansprüche**

1. Dämpfer zur Aufnahme von Kippschwingungen zwischen Fundament (16) und einer das Fußteil eines Gerätes bildenden Platte (14), insbesondere eines in erdbebengefährdeten

Gebieten aufzustellenden Hochspannungsschaltgerätes (2), unter Verwendung von die Platte durchdringenden, im Fundament verankerten Schraubbolzen (18) und von zur Begrenzung des Biegemomentes bei Schwingungen und zur Schwingungsdämpfung vorgesehenen Federelementen (38), wobei die Federelemente zwischen der Oberseite der Platte und an den Schraubbolzen angebrachten oberen Widerlagern (28, 30), die Schraubbolzen konzentrisch umgebend, angeordnet sind, dadurch gekennzeichnet, daß die Platte (14) auf an den Schraubbolzen (18) angebrachten festen unteren Widerlagern (22, 24) aufliegt, und daß als Federelemente Ringfedern (38) vorgesehen sind, die eine zur Dämpfung ausreichende Hysterese aufweisen und derart vorgespannt sind, daß bei Unterschreiten einer vorgegebenen, einstellbaren Kraft eine kraftschlüssige Verbindung zwischen der Platte (14) und dem Fundament besteht.

2. Dämpfer nach Anspruch 1, dadurch gekennzeichnet, daß die Widerlager von Muttern (22, 28) mit Scheiben (24, 30) gebildet sind, die zur Einstellung der Federvorspannung und zur Ausrichtung des Gerätes verwendbar sind.

3. Dämpfer nach Anspruch 1 oder 2, dadurch gekennzeichnet, daß auf der Platte (14) eine Abstandsscheibe (40) aufliegt, an der sich das Federelement (38) abstützt, daß konzentrisch zum Schraubbolzen (18) und gegenüber diesem axial verschiebbar eine das Federelement (38) umgebende Kappe (32) angeordnet ist, deren Oberteil (34), am oberen Widerlager (28, 30) anliegt oder selbst das Widerlager darstellt.

4. Dämpfer nach einem der vorhergehenden Ansprüche, dadurch gekennzeichnet, daß für eine Platte (14) mindestens vier Federelemente (38) derart vorgesehen sind, daß Kippbewegungen nach beiden Seiten in mindestens zwei paarweise zueinander senkrechten Richtungen erfolgen können.

**Claims**

1. Damper for the absorption of tilting oscillations between foundation (16) and a plate (14) forming the foot part of an appliance, in particular a high-voltage switching device (2) to be set up in regions endangered by earthquakes, with the use of threaded bolts (18), which are anchored in the foundation and penetrate the plate, and of spring elements (38), which are provided for oscillation damping and for limitation of the bending moment in case of oscillations, wherein the spring elements are arranged between the upper side of the plate and upper counterbearings (28, 30), which are mounted at the threaded bolts and surround the threaded bolts concentrically, characterised thereby, that the plate (14) rests on the fixed lower counterbearings (22, 24) mounted at the threaded bolts (18) and that annular springs (38) are provided as spring elements, display a hysteresis adequate for damping and are biassed in such a manner that a force-locking connection between the plate (14) and the foundation exists on a given settable force being fallen below.

2. Damper according to claim 1, characterised thereby, that the counterbearings are formed by nuts (22, 28) with washers (24, 30), which are usable for the setting of the spring bias and for the alignment of the appliance.

3. Damper according to claim 1 or 2, characterised thereby, that a spacer washer (40), against which the spring element (38) bears, rests on the plate (14) and that a cap (32), which surrounds the spring element (38) and the upper part (34) of which rests against the upper counterbearing (28, 30) or itself represents the counterbearing, is arranged co-axially with the threaded bolt (18) and displaceable axially relative to this.

4. Damper according to one of the preceding claims, characterised thereby, that at least four spring elements (38) are provided for one plate (14) in such a manner that tilting movements to both sides can take place in at least two directions each pairwise perpendicular to the other.

**Revendications**

1. Amortisseur pour l'absorption d'oscillations de relaxation entre une fondation (16) et une plaque (14) constituant le pied d'un appareil, en particulier d'un appareil de connexion haute tension (2) à monter dans une zone sismique, avec utilisation de boulons (18) ancrés dans la fondation et traversant la plaque, ainsi que d'éléments élastiques (38) pour la limitation du moment fléchissant en présence d'oscillations et l'amortissement de ces dernières, ainsi que d'éléments élastiques (38) entourant concentriquement les boulons et disposés entre la face supérieure de la plaque et des butées supérieures (28, 30) placées sur les boulons pour limiter le moment fléchissant en présence d'oscillations et amortir ces dernières, ledit amortisseur étant caractérisé en ce que la plaque (14) repose sur des butées (22, 24) inférieures fixes sur les boulons (18) ; et les éléments élastiques sont des rondelles Grower (38), présentant une hystérésis suffisante pour l'amortissement et bandées de façon à établir une liaison par action de force entre la plaque (14) et la fondation au-dessous d'une force réglable prédéterminée.

2. Amortisseur selon la revendication 1, caractérisé en ce que les butées sont constituées par des écrous (22, 28) et des rondelles (24, 30), utilisables pour le réglage du bandage de ressort et l'alignement de l'appareil.

3. Amortisseur selon une des revendications 1 ou 2, caractérisé en ce qu'une entretoise (40) sur laquelle prend appui l'élément élastique (38) repose sur la plaque (14) ; et un capot (32) entourant l'élément élastique (38) est disposé concentriquement au boulon (18) et mobile axialement par rapport à ce dernier, la partie supérieure (34) dudit capot s'appliquant sur la butée supérieure (28, 30) ou formant cette dernière.

4. Amortisseur selon une quelconque des revendications 1 à 3, caractérisé en ce que quatre éléments élastiques (38) au moins sont prévus pour une plaque (14), de façon à permettre des mouvements de relaxation de chaque côté, suivant au moins deux directions perpendiculaires.

FIG.I

FIG. 2